# EUROPEAN PATENT SPECIFICATION

(11) **EP 1 557 072 B1**
(45) Date of publication and mention of the grant of the patent: **16.02.2011**
(21) Application number: 03751150.8
(22) Date of filing: 20.10.2003
(51) Int. Cl.: H04S 1/00

(54) **EMBEDDED DATA SIGNALING**
SIGNALISIERUNG VON EINGEBETTEN DATEN
SIGNALISATION DE DONNEES INTEGREES

(30) Priority: 22.10.2002 EP 02079427
(43) Date of publication of application: 27.07.2005
(73) Proprietor: Koninklijke Philips Electronics N.V., 5621 BA Eindhoven (NL)
(72) Inventor: KLEIN MIDDELINK, Marc, W., T., NL-5656 AA Eindhoven (NL); VAN DER MEER, Jan, NL-5656 AA Eindhoven (NL)
(74) Representative: Damen, Daniel Martijn
(86) International application number: PCT/IB2003/004620
(87) International publication number: WO 2004/039127

(56) References cited:
- EP-A- 0 993 200
- WO-A-01/74085
- US-A- 5 619 384
- PATENT ABSTRACTS OF JAPAN vol. 2002, no. 07, 3 July 2002 (2002-07-03) -& JP 2002 082610 A (CANON INC), 22 March 2002 (2002-03-22)

## Description

The invention relates to signaling of embedded data, and also to the formatting and handling of data streams with embedded data.

The syntax definition of several audio coding schemes/standards (e.g. mp3 and MPEG-AAC, see e.g. ISO/IEC 13818-3 and 13818-7 respectively) provides the possibility of adding ancillary/embedded data to coded audio streams. Compliant decoders are only required to parse the embedded data, not to interpret it. In practice, the embedded data is often used to store a coded data stream related to an enhancement coder/tool (e.g. mp3PRO, MPEG-4 AAC+SBR, wherein "SBR" stands for Spectral Band Replication). Such an enhanced coder/tool can be used on top of the core coder to improve the quality of the core audio stream. Since a non-enhanced coder is required to parse the embedded data, the data embedding is done in backward compatible manner.

In MPEG-4 (see ISO/IEC 14496-1 for MPEG-4 Systems and ISO/IEC 14496-3 for MPEG-4 Audio), signaling of stream content is done by means of descriptors. Each elementary stream (i.e. a consecutive flow of mono-media data such as audio or video which can be packetized) has a corresponding descriptor. The current descriptor definition does not provide for signaling of embedded data. Signaling of the embedded data can of course be realized by means of a corrigendum on the descriptors. However, such a corrigendum cannot be implemented such that the standard remains backward compatible with the current definition. Alternatively, one could use a descriptor in the embedded data itself. This has the disadvantage that the embedded data is not signaled at elementary stream level and that therefore the embedded data needs to be accessed to see what it contains.

WO01/74085 describes a system which allows embedding additional information in video, namely 4 bits per slice of 8 pixel lines.

This is achieved by doubling a main data describing Quantization scale code (QSC) in the first blocks of a slice, so that the QSC in the slice header becomes overwritable with embedded data (which is typically identification information for copy tracking, such as e.g. the person who purchased the present video copy under which billing number, on which date etc.).

An object of the invention is to provide advantageous signaling of embedded data. To this end, the invention provides a method, an encoder, a signal, a storage medium, a method of decoding, a decoder, a transmitter or recorder and a receiver as defined in the independent claims. Advantageous embodiments are defined in the dependent claims.

An object of the invention is to provide advantageous signaling of embedded video data. To this end, the invention provides a method, an encoder, a signal, a storage medium, a method of decoding, a decoder, a transmitter or recorder and a receiver as defined in the independent claims. Advantageous embodiments are defined in the dependent claims.

According to a first aspect of the invention, a signal representing main video data is provided, the main video data including embedded data, the main video data being provided with a main video data descriptor for signaling content included in the main video data, wherein an embedded video data descriptor is formed for signaling content included in the embedded video data, and wherein the embedded video data descriptor is provided outside (or separate from) the main data and the main video data descriptor. By providing the embedded data descriptor outside the main data descriptor, a corrigendum of a currently defined set of main data descriptors is not necessary to take into account non-defined content included in the embedded video data; a signal having new embedded data descriptors remains backward compatible as regards the main data and the main data descriptors. By providing the embedded data descriptor outside the main video data and thus also outside the embedded video data, the main data remains compatible and it is further not necessary to access the embedded video data itself to get a description of it.

As a result, elementary streams with embedded video data may have two respective descriptors, one for the main video data and another for the embedded video data.

The main video data, the embedded video data, the main data descriptor and the embedded data descriptor may all be present in the same transport signal.

Embodiments of the invention are especially useful in those standards in which it is possible to implement a separate embedded data descriptor such that a conventional coder will not wrongfully use its contents, e.g. by ignoring the embedded data descriptor e.g. simply because it uses a non-recognizable code which orders a decoder to ignore the information. Examples of standards where this is easily possible are MPEG-4 systems and RFC 3016.

In the drawings:
Fig. 1 shows an example of a conventional elementary stream;
Fig. 2 shows an example of an elementary stream provided with an embedded data descriptor according to an embodiment of the invention;
Fig. 3 shows a system according to an embodiment of the invention.

The drawings only show those elements that are necessary to understand the embodiments of the invention.

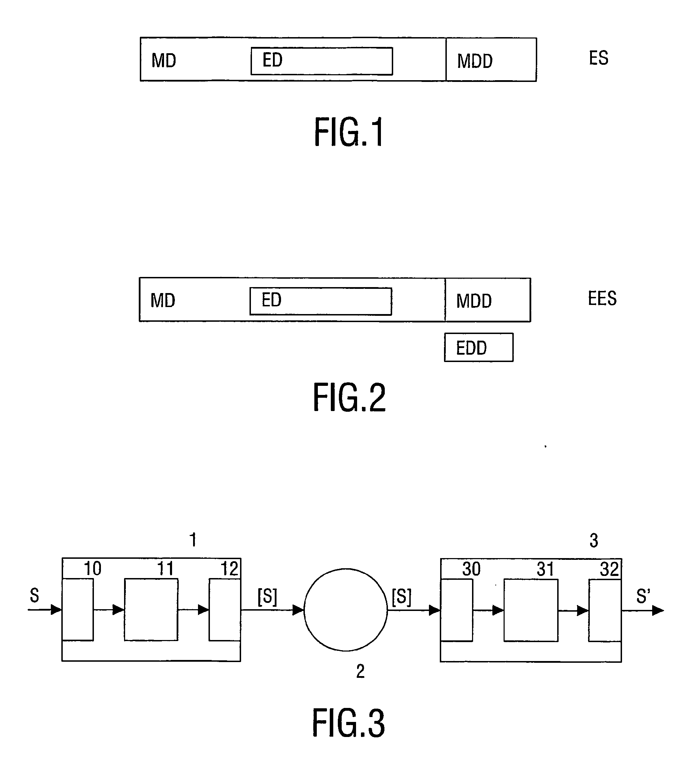

Fig. 1 shows an example of a conventional elementary stream ES. The elementary stream ES may be a packetized elementary stream. The elementary stream ES comprises main data MD and a main data descriptor MDD. An exemplary descriptor MDD for an encoded audio stream may be as follows:

```
 MDD
 {
              Audio object type ("AOT")
              Sampling frequency
              Channel configuration
              AOT specific configuration information
 }
```

As an example, configuration information specific to AAC related AOT's include a frame length, i.e. the number of PCM samples per channel related to one AAC audio frame.

Further, the main data MD includes embedded data ED. The main data MD preferably comprises encoded audio data, e.g. AAC or mp3 encoded data. It is also possible that the main data MD comprises video data. The embedded data ED preferably includes enhancement data to enhance the main data MD, e.g. by spectral band replication in the case of audio or by spatial, SNR or other enhancement for video. Alternatively, the enhancement data is suitable for extension of the number of channels, e.g. from 1 to 2 channels or from 2 to 5 channels as indicated above.

In some systems, e.g. in MPEG-4, the data descriptor MDD is not concatenated with the main data MD in the elementary stream, but is provided separately. To determine which descriptor relates to which elementary stream, some identification is used in both the descriptor as well as the elementary stream ES.

The embedded data ED is parsed in a decoder and recognized by an enhanced decoder which is able to use the enhancement data present in ED. Usually, the embedded data ED includes some kind of identification/description to make identification of the enhancement data ED possible, although in proprietary systems it is also possible to agree between an encoder and a decoder that the embedded data ED always comprises enhancement data according to a predetermined format.

Fig. 2 shows an example of a further elementary stream EES provided with an embedded data descriptor EDD according to an embodiment of the invention. The embedded data descriptor EDD includes identification information to make identification of the type of embedded data ED possible. The descriptor EDD may also include other useful information. An exemplary descriptor EDD for the data embedded in an encoded audio stream may be as follows:

```
 EDD
 {
            Audio (enhancement) object type ("AOT")
            AOT specific configuration information
 }
```

The definition of the EDD strongly depends on the audio (enhancement) object type. In the case of SBR, it contains the sampling frequency mode, which can be single- or multi-rate. In the case of channel extension, the embedded data descriptor may contain information on the extended channel configuration.

The embedded data descriptor EDD is provided outside the main data MD and the main data descriptor MDD and is therefore easily accessible. Depending on the coding scheme used the data descriptors MDD and EDD may be supplied in a concatenated way with the main data MD. It is also possible to provide the descriptors separately in another part of the signal, e.g. all descriptors grouped together. Some linking information is then necessary to relate the descriptors to the relevant elementary streams.

### MPEG-4 implementation

The above described embodiment of the invention is advantageously applied in an MPEG-4 or MPEG-4 like coding scheme. In MPEG-4, the main data descriptor MDD and the embedded data descriptor EDD are provided separately with respect to the elementary stream EES. MPEG-4 systems provides tools to relate the descriptors to the relevant elementary streams.

### RFC3016 implementation

In RFC 3016 (IETF RFC 3016: "RTP Payload Format for MPEG-4 Audio/Visual Streams", Kikuchi Y. et al., November 2000), descriptor information is provided as a Session Description Protocol (SDP) parameter. For example in case of audio the audio decoding configuration is described by the parameter "config" as a hexadecimal string that represents the audio descriptor as defined by MPEG-4. An example is given below:
config=000001B001000001B5090000010000000120008440FA282C2090A21F.
Another descriptor can be added by defining a new parameter, such as embedded-data-config. Receivers are required to ignore new or unknown parameters.

### System according to an embodiment of the invention

Fig. 3 shows a system according to an embodiment of the invention. The system comprises an apparatus 1 for transmitting or recording an encoded signal [S]. The apparatus 1 comprises an input unit 10 for obtaining an input signal S, e.g. an audio and/or video signal. The input unit 10 may be an antenna, microphone, network connection, etc. The apparatus 1 further comprises an encoder 11 for encoding the signal S according to an above described embodiment of the invention (see in particular Fig. 2) in order to obtain an encoded signal comprising main data MD including embedded data ED, and the descriptors MDD and EDD. The encoded signal is furnished to an output unit 12 which formats the main data MD including the embedded data ED, and the descriptors MDD and EDD into an encoded signal [S] having a suitable format for transmission or storage via a transmission medium or storage medium 2 (e.g. as defined in RFC 3016). The system further comprises a receiver or reproduction apparatus 3 which receives the encoded signal [S] in an input unit 30. The input unit 30 furnishes the main data MDD, the embedded data ED and the data descriptors MDD and EDD to the decoder 31. The decoder 31 decodes the encoded signal by performing a decoding process which is substantially an inverse operation of the encoding in the encoder 11 wherein a decoded signal S' is obtained which corresponds to the original signal S except for those parts which were lost during the encoding process. The decoder 31 furnishes the decoded signal S' to a reproduction unit 32 such as a speaker for reproducing the decoded signal S'. The reproduction unit 32 may also be a transmitter for further transmitting the decoded signal S' for example over an in-home network, etc.

Existing receivers are able to ignore the EDD as described above for the RFC 3016 case. Future receiver implementations may be able to interpret the EDD. In this case passing of the EDD to unit 31 may be dependent on the capabilities of unit 31. For example, in those implementations wherein the decoder 31 does not support a feature to which the embedded data relates, then the input unit 30 may decide not to provide the EDD to unit 31 in order to save bandwidth.

Embodiments of the invention may be applied in audio and/or video broadcast, Internet Radio, 3GPP, Internet distribution, Solid State Audio, 3G terminals, GPRS and commercial successors thereof.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. This word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

## Claims

1. A method of providing a signal representing main video data (MD), the main video data including embedded video data (ED), the main video data being provided with a main data descriptor (MDD) for signaling content included in the main video data, the method comprising:
forming an embedded data descriptor (EDD) for signaling content included in the embedded video data, and
providing the embedded data descriptor outside the main data and the main data descriptor.

2. A method as claimed in claim 1, wherein the main data comprises video data and wherein the embedded data comprises enhancement data for enhancing the video data.

3. An encoder (11+12) for providing a signal representing main video data (MD), the main video data including embedded video data (ED), the main video data being provided with a main data descriptor (MDD) for signaling content included in the main video data, the encoder comprising:
means (11) for forming an embedded data descriptor (EDD) for signaling content included
in the embedded video data, and
means (12) for providing the embedded data descriptor outside the main video data and the main data descriptor.

4. A signal (S) representing main video data (MD), the main data including embedded video data (ED), the main video data being provided with a main data descriptor (MDD) for signaling content included in the main video data, the embedded data being provided with an embedded data descriptor (EDD) for signaling content included in the embedded video data, wherein the embedded data descriptor is provided outside the main data and the main data descriptor.

5. A storage medium (2) having stored thereon a signal as claimed in claim 4.

6. A method of decoding a video signal (S), the video signal representing main video data (MD), the main video data including embedded video data (ED), the main video data being provided with a main data descriptor (MDD) for signaling content included in the main video data, the embedded video data being provided with an embedded data descriptor (EDD) for signaling content included in the embedded video data, wherein the embedded data descriptor is provided outside the main video data and the main data descriptor, the decoding method comprising the steps of:
reading the embedded data descriptor; and
using the embedded data in dependence on the reading of the embedded data descriptor.

7. A decoder (30+31) for decoding a video signal (S), the video signal representing main video data (MD), the main video data including embedded video data (ED), the main data being provided with a main data descriptor (MDD) for signaling content included in the main video data, the embedded video data being provided with an embedded data descriptor (EDD) for signaling content included in the embedded video data, wherein the embedded data descriptor is provided outside the main video data and the main data descriptor, the decoder comprising:
means (30) for reading the embedded data descriptor; and
means (31) for using the embedded data in dependence on the reading of the embedded data descriptor.

8. A transmitter or recorder (1) comprising:
an input unit for obtaining an input video signal,
an encoder as claimed in claim 3 to encode the input video signal to obtain main video data, the main video data including embedded video data, the main data being provided with a main data descriptor for signaling content included in the main video data, the embedded data being provided with an embedded data descriptor for signaling content included in the embedded video data, wherein the embedded data descriptor is provided outside the main video data and the main data descriptor, and
an output unit for formatting the main video data including the embedded video data, the main data descriptor, and the embedded data descriptor into an encoded signal and for transmitting or recording the encoded signal.

9. A receiver (3) comprising:
an input unit for obtaining a video signal representing main video data, the main video data including embedded video data, the main video data being provided with a main data descriptor for signaling content included in the main video data, the embedded data being provided with an embedded data descriptor for signaling content included in the embedded video data, wherein the embedded data descriptor is provided outside the main video data and the main data descriptor,
a decoder as claimed in claim 7 for decoding the video signal to obtain a decoded video signal, and
an output unit for reproducing the decoded video signal.

## Patentansprüche

1. Verfahren zum Bereitstellen eines Hauptvideodaten (MD) darstellenden Signals, wobei die Hauptvideodaten eingebettete Videodaten (ED) umfassen, wobei die Hauptvideodaten mit einem Deskriptor für Hauptdaten (MDD) zum Signalisieren von in den Hauptvideodaten enthaltenem Inhalt bereitgestellt werden, wobei das Verfahren Folgendes umfasst:
Bilden eines Deskriptors für eingebettete Daten (EDD) zum Signalisieren von in den eingebetteten Videodaten enthaltenem Inhalt, und
Bereitstellen des Deskriptors für eingebettete Daten außerhalb der Hauptdaten und des Deskriptors für Hauptdaten.

2. Verfahren nach Anspruch 1, wobei die Hauptdaten Videodaten umfassen und wobei die eingebetteten Daten Verbesserungsdaten zum Verbessern der Videodaten umfassen.

3. Codierer (11+12) zum Bereitstellen eines Hauptvideodaten (MD) darstellenden Signals, wobei die Hauptvideodaten eingebettete Videodaten (ED) umfassen, wobei die Hauptvideodaten mit einem Deskriptor für Hauptdaten (MDD) zum Signalisieren von in den Hauptvideodaten enthaltenem Inhalt bereitgestellt werden, wobei der Codierer Folgendes umfasst:
Mittel (11) zum Bilden eines Deskriptors für eingebettete Daten (EDD) zum Signalisieren von in den eingebetteten Videodaten enthaltenem Inhalt, und
Mittel (12) zum Bereitstellen des Deskriptors für eingebettete Daten außerhalb der Hauptvideodaten und des Deskriptors für Hauptdaten.

4. Hauptvideodaten (MD) darstellendes Signal (S), wobei die Hauptdaten eingebettete Videodaten (ED) umfassen, wobei die Hauptvideodaten mit einem Deskriptor für Hauptdaten (MDD) zum Signalisieren von in den Hauptvideodaten enthaltenem Inhalt bereitgestellt werden, wobei die eingebetteten Daten mit einem Deskriptor für eingebettete Daten (EDD) zum Signalisieren von in den eingebetteten Videodaten enthaltenem Inhalt bereitgestellt werden, wobei der Deskriptor für eingebettete Daten außerhalb der Hauptdaten und des Deskriptors für Hauptdaten bereitgestellt wird.

5. Speichermedium (2) mit einem darauf gespeicherten Signal nach Anspruch 4.

6. Verfahren zum Decodieren eines Videosignals (S), wobei das Videosignal Hauptvideodaten (MD) darstellt, wobei die Hauptvideodaten eingebettete Videodaten (ED) umfassen, wobei die Hauptvideodaten mit einem Deskriptor für Hauptdaten (MDD) zum Signalisieren von in den Hauptvideodaten enthaltenem Inhalt bereitgestellt werden, wobei die eingebetteten Videodaten mit einem Deskriptor für eingebettete Daten (EDD) zum Signalisieren von in den eingebetteten Videodaten enthaltenem Inhalt bereitgestellt werden, wobei der Deskriptor für eingebettete Daten außerhalb der Hauptvideodaten und des Deskriptors für Hauptdaten bereitgestellt wird, wobei das Decodierverfahren die folgenden Schritte umfasst:
Lesen des Deskriptors für eingebettete Daten; und
Verwenden der eingebetteten Daten in Abhängigkeit vom Lesen des Deskriptors für eingebettete Daten.

7. Decodierer (30+31) zum Decodieren eines Videosignals (S), wobei das Videosignal Hauptvideodaten (MD) darstellt, wobei die Hauptvideodaten eingebettete Videodaten (ED) umfassen, wobei die Hauptdaten mit einem Deskriptor für Hauptdaten (MDD) zum Signalisieren von in den Hauptvideodaten enthaltenem Inhalt bereitgestellt werden, wobei die eingebetteten Videodaten mit einem Deskriptor für eingebettete Daten (EDD) zum Signalisieren von in den eingebetteten Videodaten enthaltenem Inhalt bereitgestellt werden, wobei der Deskriptor für eingebettete Daten außerhalb der Hauptvideodaten und des Deskriptors für Hauptdaten bereitgestellt wird, wobei der Decodierer Folgendes umfasst:
Mittel (30) zum Lesen des Deskriptors für eingebettete Daten; und
Mittel (31) zum Verwenden der eingebetteten Daten in Abhängigkeit vom Lesen des Deskriptors für eingebettete Daten.

8. Sender oder Aufzeichnungsgerät (1) mit:
einer Eingangseinheit zum Erlangen eines Eingangsvideosignals,
einem Codierer nach Anspruch 3 zum Codieren des Eingangsvideosignals, um Hauptvideodaten zu erlangen, wobei die Hauptvideodaten eingebettete Videodaten umfassen, wobei die Hauptdaten mit einem Deskriptor für Hauptdaten zum Signalisieren von in den Hauptvideodaten enthaltenem Inhalt bereitgestellt werden, wobei die eingebetteten Daten mit einem Deskriptor für eingebettete Daten zum Signalisieren von in den eingebetteten Videodaten enthaltenem Inhalt bereitgestellt werden, wobei der Deskriptor für eingebettete Daten außerhalb der Hauptvideodaten und des Deskriptors für Hauptdaten bereitgestellt wird, und
einer Ausgangseinheit zum Formatieren der die eingebetteten Videodaten enthaltenden Hauptvideodaten, des Deskriptors für Hauptdaten und des Deskriptors für eingebettete Daten zu einem codierten Signal und zum Übertragen oder Aufzeichnen des codierten Signals.

9. Empfänger (3) mit:
einer Eingangseinheit zum Erlangen eines Hauptvideodaten darstellenden Videosignals, wobei die Hauptvideodaten eingebettete Videodaten umfassen, wobei die Hauptvideodaten mit einem Deskriptor für Hauptdaten zum Signalisieren von in den Hauptvideodaten enthaltenem Inhalt bereitgestellt werden, wobei die eingebetteten Daten mit einem Deskriptor für eingebettete Daten zum Signalisieren von in den eingebetteten Videodaten enthaltenem Inhalt bereitgestellt werden, wobei der Deskriptor für eingebettete Daten außerhalb der Hauptvideodaten und des Deskriptors für Hauptdaten bereitgestellt wird,
einem Decodierer nach Anspruch 7 zum Decodieren des Videosignals, um ein decodiertes Videosignal zu erlangen, und
einer Ausgangseinheit zum Wiedergeben des decodierten Videosignals.

## Revendications

1. Procédé de fourniture d'un signal représentant des données vidéo principales (MD), les données vidéo principales comprenant des données vidéo intégrées (ED), les données vidéo principales étant dotées d'un descripteur de données principales (MDD) pour signaler le contenu inclus dans les données vidéo principales, le procédé comprenant :
la formation d'un descripteur de données intégrées (EDD) pour signaler le contenu inclus dans les données vidéo intégrées, et
la fourniture du descripteur de données intégrées à l'extérieur des données principales et du descripteur de données principales.

2. Procédé selon la revendication 1, dans lequel les données principales comprennent des données vidéo et dans lequel les données intégrées comprennent des données d'amélioration pour améliorer les données vidéo.

3. Encodeur (11 + 12) pour la fourniture d'un signal représentant les données vidéo principales (MD), les données vidéo principales comprenant des données vidéo intégrées (ED), les données vidéo principales étant dotées d'un descripteur de données principales (MDD) pour signaler le contenu inclus dans les données vidéo principales, l'encodeur comprenant :
des moyens (11) pour la formation d'un descripteur de données intégrées (EDD) pour signaler le contenu inclus dans les données vidéo intégrées, et
des moyens (12) pour la fourniture du descripteur de données intégrées à l'extérieur des données vidéo principales et du descripteur de données principales.

4. Signal (S) représentant les données vidéo principales (MD), les données principales comprenant des données vidéo intégrées (ED), les données vidéo principales étant dotées d'un descripteur de données principales (MDD) pour signaler le contenu inclus dans les données vidéo principales, les données intégrées étant dotées d'un descripteur de données intégrées (EDD) pour signaler le contenu inclus dans les données vidéo intégrées, dans lequel le descripteur de données intégrées est disposé à l'extérieur des données principales et du descripteur de données principales.

5. Support de stockage (2) stockant dans celui-ci un signal selon la revendication 4.

6. Procédé de décodage d'un signal vidéo (S), le signal vidéo représentant les données vidéo principales (MD), les données vidéo principales comprenant des données vidéo intégrées (ED), les données vidéo principales étant dotées d'un descripteur de données principales (MDD) pour signaler le contenu inclus dans les données vidéo principales, les données vidéo intégrées étant dotées d'un descripteur de données intégrées (EDD) pour signaler le contenu inclus dans les données vidéo intégrées, dans lequel le descripteur de données intégrées est disposé à l'extérieur des données vidéo principales et du descripteur de données principales, le procédé de décodage comprenant les étapes consistant à :
lire le descripteur de données intégrées ; et
utiliser les données intégrées selon la lecture du descripteur de données intégrées.

7. Décodeur (30 + 31) pour le décodage d'un signal vidéo (S), le signal vidéo représentant les données vidéo principales (MD), les données vidéo principales comprenant des données vidéo intégrées (ED), les données principales étant dotées d'un descripteur de données principales (MDD) pour signaler le contenu inclus dans les données vidéo principales, les données vidéo intégrées étant dotées d'un descripteur de données intégrées (EDD) pour signaler le contenu inclus dans les données vidéo intégrées, dans lequel le descripteur de données intégrées est disposé à l'extérieur des données vidéo principales et du descripteur de données principales, le décodeur comprenant :
des moyens (30) pour lire le descripteur de données intégrées ; et
des moyens (31) pour utiliser les données intégrées selon la lecture du descripteur de données intégrées.

8. Emetteur-récepteur or enregistreur (1) comprenant :
une unité d'entrée pour obtenir un signal vidéo d'entrée,
un encodeur selon la revendication 3 pour encoder le signal vidéo d'entrée pour obtenir des données vidéo principales, les données vidéo principales comprenant des données vidéo intégrées, les données principales étant dotées d'un descripteur de données principales pour signaler le contenu inclus dans les données vidéo principales, les données intégrées étant dotées d'un descripteur de données intégrées pour signaler le contenu inclus dans les données vidéo intégrées, dans lequel le descripteur de données intégrées est disposé à l'extérieur des données vidéo principales et le descripteur de données principales, et
une unité de sortie pour formater les données vidéo principales comprenant les données vidéo intégrées, le descripteur de données principales, et le descripteur de données intégrées en signal encodé et pour émettre ou enregistrer le signal encodé.

9. Récepteur (3) comprenant :
une unité d'entrée pour obtenir un signal vidéo représentant les données vidéo principales, les données vidéo principales comprenant des données vidéo intégrées, les données vidéo principales étant dotées d'un descripteur de données principales pour signaler le contenu inclus dans les données vidéo principales, les données intégrées étant dotées d'un descripteur de données intégrées pour signaler le contenu inclus dans les données vidéo intégrées, dans lequel le descripteur de données intégrées est disposé à l'extérieur des données vidéo principales et le descripteur de données principales,
un décodeur selon la revendication 7 pour le décodage du signal vidéo pour obtenir un signal vidéo décodé, et
une unité de sortie pour reproduire le signal vidéo décodé.
